# EUROPÄISCHE PATENTSCHRIFT

(11) **EP 2 259 896 B1**
(45) Veröffentlichungstag und Bekanntmachung des Hinweises auf die Patenterteilung: **07.03.2012**
(21) Anmeldenummer: 09723445.4
(22) Anmeldetag: 19.03.2009
(51) Int. Cl.: B23Q 1/40, B23Q 1/60, B23Q 5/027, B23Q 5/28, H02K 41/02

(54) **LINEARANTRIEB FÜR EINE WERKZEUGMASCHINE UND VERFAHREN ZUR BEWEGUNG EINES WERKZEUGSCHLITTENS**
LINEAR DRIVE FOR A MACHINE TOOL AND METHOD FOR MOVING A TOOL CARRIAGE
ENTRAÎNEMENT LINÉAIRE POUR UNE MACHINE-OUTIL ET PROCÉDÉ PERMETTANT DE DÉPLACER UN CHARIOT PORTE-OUTIL

(30) Priorität: 19.03.2008 DE 102008015049
(43) Veröffentlichungstag der Anmeldung: 15.12.2010
(73) Patentinhaber: Schneider GmbH & Co. KG, 35239 Steffenberg (DE)
(72) Erfinder: SCHNEIDER, Gunter, 35037 Marburg (DE); BUCHENAUER, Helwig, 35232 Dautphetal-Buchenau (DE); BÖRNER, Ulf, 35041 Marburg (DE); KRÄMER, Klaus, 35232 Dautphetal-Friedensdorf (DE)
(74) Vertreter: Thews, Gustav
(86) Internationale Anmeldenummer: PCT/EP2009/002041
(87) Internationale Veröffentlichungsnummer: WO 2009/115332

(56) Entgegenhaltungen:
- EP-A- 0 849 038
- WO-A-2004/100342
- DE-A1- 10 312 008
- DE-A1- 19 939 207
- US-A- 5 357 158

## Beschreibung

Die Erfindung bezieht sich auf einen Linearantrieb für eine Werkzeugmaschine mit einem Gehäuse, mit einem in dem Gehäuse über zwei Lager in Richtung einer Mittelachse axial bewegbar gelagerten Schlitten der Länge 11 und mit mindestens einem ersten Motor, aufweisend ein erstes Motorelement und ein zweites Motorelement, wobei das erste Motorelement als Primärteil ausgebildet und an dem Schlitten angeordnet ist und das zweite Motorelement als Sekundärteil ausgebildet und an dem Gehäuse angeordnet ist. Das Primärteil, welches aus einer Spule gebildet ist, ist leichter als das aus einem Permanentmagneten gebildete Sekundärteil des Motors. Durch Einsatz des Primärteils als Läufer des so gebildeten Motors kann der Läufer, der mit dem Primärteil bewegt wird, insgesamt leichter ausgebildet werden. In diesem Fall muss jedoch das Primärteil mit den gewünschten Spannungssignalen zu versorgen sein, was dazu führt, dass ein flexibler Stromanschluss bzw. eine flexible Versorgungsleitung für den Läufer bzw. das Primärteil zur Verfügung gestellt werden muss.

Aus derWO 2004/100342 ist ein Linearantrieb mit den Merkmalen des Oberbegriffs des Anspruchs 1 bekannt.

Aus der DE 10 2004 049 951 A1 ist ein Linearmotor bekannt, der zwei seitlich zum Läufer versetzt angeordnete Motoren aufweist, wobei der Läufer stirnseitig über je eine doppel-V-förmige Blattfederanordnung, die sich jeweils zu beiden Seiten des Läufers erstreckt, gelagert ist. Die Primärteile der Motoren sind läuferseitig vorgesehen und flach ausgebildet, so dass sie in einer schlitzförmigen Ausnehmung des jeweiligen gehäuseseitigen Sekundärteils angetrieben werden können. Die durch das jeweilige Primärteil aufgespannte Ebene ist parallel zu einer durch die Lageranordnung des Schlittens aufgespannten Ebene angeordnet.

Ein weiterer Linearantrieb mit einem Träger bzw. Läufer und einem Trägergehäuse ist aus der DE 198 06 832 A1 bekannt. Der Träger ist an dem Gehäuse über Antriebselemente zweier Motoren längs bewegbar. Der Träger weist ein offenes Querschnittsprofil auf und dient der Aufnahme des jeweiligen Magneten (Sekundärteil). Die gehäuseseitigen Antriebselemente (Primärteile) füllen aufgrund des Platzbedarfs für die Wicklungen nahezu den gesamten Querschnitt des Trägers aus. Der Träger ist über ein Wälzkörperfestlager und ein Gleitloslager im Trägergehäuse geführt, damit Verspannungen vermieden werden.

Aus der EP 1 174 990 A2 ist ein Linearmotor mit einem läuferseitigen Primärteil und einem gehäuse- bzw. statorseitigen Sekundärteil bekannt. Der Läufer ist in Richtung einer Mittelachse über mehrere Führungsschienen axial bewegbar gelagert. Alle Führungsschienen sind mit Bezug zu der Mittelachse auf einer Seite des Läufers vorgesehen.

Ausgehend von diesem Stand der Technik liegt der Erfindung die Aufgabe zugrunde, einen Linearmotor derart auszubilden und anzuordnen, dass eine robuste Lagerung und eine maximale Oszillationsfrequenz gewährleistet sind.

Gelöst wird die Aufgabe erfindungsgemäß dadurch, dass das erste Lager und das zweite Lager als Wälzkörperlager ausgebildet und mit Bezug zur Mittelachse gegenüberliegend zum Schlitten angeordnet sind und einen Abstand a zur Mittelachse aufweisen. Der Schlitten wird somit auf zwei Seiten, vorzugsweise oben und unten, über die Lager gelagert. Die über die Lager aufzunehmenden Kräfte sind von dem Abstand, den das jeweilige Lager von der Mittelachse des Schlittens aufweist, abhängig. Der Einsatz von Wälzkörperlager erhöht zwar im Vergleich zum Einsatz von Gleitlagern die zu bewegende Masse, jedoch sind Wälzkörperlager wesentlich robuster. Die, gegenüber zum Schlitten, vorgesehene Anordnung der Lager gewährleistet eine optimale Aufnahme der entstehenden Kräfte und Momente.

Vorteilhaft kann es hierzu auch sein, wenn das erste Lager und das zweite Lager als Kreuzrollenlager ausgebildet sind. Der Einsatz von zwei Kreuzrollenlagern, die gegenüberliegend zum Schlitten angeordnet sind, wird eine ausreichend bestimmte Lagerung sowie eine sehr präzise und robuste Lagerung gewährleistet. Jedes Kreuzrollenlager stellt für sich ein dreiwertiges Lager dar, das eine dynamische Oszillation des Schlittens bei minimalen Gleit- bzw. Rollreibungsverlusten trotz der Länge gewährleistet. Das Kreuzrollenlager ist dabei so ausgebildet, dass alle Wälzkörper zu jedem Zeitpunkt unter Last stehen bzw. in Wirkkontakt mit den gehäuseseitigen und läuferseitigen Lagerflächen stehen.

Zudem kann es vorteilhaft sein, wenn das erste Lager und das zweite Lager eine Länge 12 und je mindestens fünf Wälzkörper aufweisen, wobei die Länge 12 des Lagers mindestens 50 % der Länge 11 des Schlittens beträgt. Der Schlitten ist somit über eine ausreichende Länge 12 gelagert bzw. geführt. Die Bewegung des Kreuzrollenlagers bzw. dessen Käfig ist somit auch gewährleistet.

Ferner kann es vorteilhaft sein, wenn das Primärteil flach ausgebildet ist und in radialer Richtung R zur Mittelachse oder parallel zur Richtung R vom Schlitten flügelartig absteht, wobei das Sekundärteil einen eine nutförmige Aussparung bildenden U-förmigen Querschnitt aufweist, in dem das Primärteil aufgenommen ist. Durch die U-Anordnung des Sekundärteils werden die generierten Anziehungskräfte der gegenüberliegenden Magneten kompensiert, sodass die Führung des Primärteils bzw. die Lager entlastet sind. Der Einsatz von ausschließlich nichtmagnetischem Material, verhindert das Auftreten von Störfeldern sowie Störeinflüssen, die auf die Verwendung von beabstandeten Eisenteilen zurückzuführen sind. Das Primärteil ist eisenlos und vorzugsweise in Kunststoff eingegossen. Somit ist das Primärteil sehr leicht.

Die den U-förmigen Querschnitt bildende Aussparung bzw. Nut ist flach ausgebildet, d.h. sie weist eine Höhe auf, die mindestens um den Faktor 3 kleiner ist als die Tiefe der Nut, oder die Länge der Nut. Gleiches gilt für die flache Form des Primärteils. Die Höhe bzw. Dicke des Primärteils ist mindestens um den Faktor 3 kleiner als die Tiefe bzw. Breite des Primärteils oder die Länge des Primärteils.

Alternativ zu der in radialer Richtung zur Mittelachse des Schlittens abstehenden Richtung R kann das Primärteil auch in einer Richtung P parallel zu der vorgenannten Richtung R abstehen. Das Primärteil steht also in jedem Fall über die entsprechende Kopplungsfläche am Schlitten um einen Großteil seiner Tiefe bzw. Breite hervor. Über einen Großteil dieser Tiefe bzw. Breite wird das Primärteil innerhalb der nutförmigen Aussparung aufgenommen. Sowohl die Aussparung als auch das Primärteil spannen bezüglich ihrer flachen Bauform eine Ebene E2 auf. Vorteilhaft kann es auch sein, wenn ein zweiter Motor mit identischer Bauweise vorgesehen ist, der mit Bezug zum Schlitten gegenüberliegend zum ersten Motor angeordnet ist, wobei beide Primärteile mit Bezug zu der flachen Grundform in der gemeinsamen Ebene E2 angeordnet sind. Die flache Ausbildung des Primärteils sowie die Anordnung der beiden Primärteile in einer Ebene E2 gewährleisten eine äußerst geringe Bauhöhe des so gebildeten Motors. Die symmetrische Anordnung der Motoren gewährleistet eine symmetrische Krafteinleitung. Der jeweilige Motor kann aufgrund der halben zu erbringenden Leistung entsprechend klein ausgebildet sein.

Dabei kann es vorteilhafterweise vorgesehen sein, dass die Mittelachse und die beiden Lager in einer gemeinsamen Ebene E1 angeordnet sind, wobei die Ebene E1 rechtwinklig zu der Ebene E2 angeordnet ist. Der zur Verfügung stehende Bauraum wird seiner Breite und Höhe nach auf die Anordnung der Motoren wie vorgehend beschrieben sowie auf die Anordnung der Lager aufgeteilt. Während sich die Motoren beispielsweise nach rechts und links zum Läufer hin erstrecken, sind die beiden Lager sowie die entsprechenden Aufnahmen gehäuseseitig oben und unten vorgesehen. Die beiden Aufnahmeflächen für die beiden Lager können somit möglichst präzise in dem einen Gehäuseteil realisiert werden.

Von besonderer Bedeutung kann für die vorliegende Erfindung sein, wenn das Gehäuse ein erstes Gehäuseteil und ein zweites Gehäuseteil aufweist, wobei das erste Gehäuseteil eine erste Aufnahmefläche für das erste Lager, eine zweite Aufnahmefläche für das zweite Lager und eine dritte Aufnahmefläche für das Sekundärteil aufweist. Die Einbindung möglichst vieler Lagerflächen in ein Gehäuseteil gewährleistet eine maximale Präzision bei der Herstellung der Lagerflächen, insbesondere bezüglich der relativen Lage untereinander. Dass die vierte Anlagefläche für das zweite Sekundärteil am zweiten Gehäuseteil vorgesehen ist, ist weniger kritisch, da zwischen dem zweiten Sekundärteil und dem zugehörigen, am Schlitten befestigten Primärteil ein Luftspalt gegeben ist. Die bei der Ankopplung des zweiten Gehäuseteils bestehenden Toleranzen müssen lediglich bei der Bestimmung des Luftspaltes berücksichtigt werden. Die gehäuseseitigen Toleranzen haben beim Zusammenbau der Gehäuseteile demnach lediglich Einfluss auf die relative Lage zwischen dem Sekundärteil und dem Primärteil.

Im Zusammenhang mit der erfindungsgemäßen Ausbildung und Anordnung kann es von Vorteil sein, wenn der Schlitten eine erste Stirnseite und eine zweite Stirnseite aufweist, wobei im Bereich der ersten Stirnseite eine Aufnahme für ein Werkzeug vorgesehen ist und im Bereich der zweiten Stirnseite ein Wegmesssystems vorgesehen ist. Die sechs zur Verfügung stehenden Raumachsen für die Ausdehnung des erfindungsgemäßen Motors sind somit erschöpft. Die beiden verbleibenden Raumachsen werden nach vorne hin durch das Werkzeug bzw. die Aufnahme dafür sowie an dem anderen Ende für das Wegmesssystem beansprucht. Somit ist für die jeweilige Bauteilgruppe, also Motor, Lagerung, Werkzeug und Wegmesssystem die gewünschte räumliche Zugänglichkeit während des Betriebs ebenfalls gewährleistet.

Vorteilhaft kann es ferner sein, wenn ein Dichtmittel vorgesehen ist, mittels dessen das Wegmesssystem gegenüber einem Innenraum des Gehäuses, in dem der geführte Teil des Schlittens und die Lager angeordnet sind, abgeschottet ist. Aufgrund der in die Lager einzubringenden Schmiermittel und der damit erzeugten Verschmutzungsquelle dient die erfindungsgemäße Abdichtung des Wegmesssystems für eine höhere Standzeit und Genauigkeit desselben. Das Wegmesssystem ist somit in einem abgeschotteten Raum angeordnet, so dass eine Verschmutzung nahezu ausgeschlossen ist.

Außerdem kann es vorteilhaft sein, wenn zwischen dem Gehäuse und dem Lager Vorspannmittel vorgesehen sind, mittels derer das Lager gegen den Schlitten vorspannbar ist, und als Vorspannmittel mehrere Schrauben vorgesehen sind, die parallel zu der Ebene E1 angeordnet sind und die mittel- oder unmittelbar gegen das Lager vorspannbar sind. Durch die erfindungsgemäßen Vorspannmittel lässt sich das Kreuzrollenlager über die gesamte Länge gleichmäßig gegen den Schlitten vorspannen, so dass eine spielfreie und reibungsarme Lagerung des Schlittens gewährleistet ist. Zum Festsetzen des jeweils vorzuspannenden Lagers bzw. Lagerteils werden separate Schrauben verwendet, so dass die Funktionentrennung zwischen Vorspannen und Festsetzen gewährleistet ist.

Dabei kann es von Vorteil sein, wenn Kühlmittel vorgesehen sind, über die das jeweilige Primärteil kühlbar ist, und als Kühlmittel ein Be- und/oder Entlüftungskanal im Bereich der schlitzförmigen Aussparung des Sekundärteils und/oder im Bereich des Primärteils vorgesehen ist. Als Kühlmedium wird vorzugsweise Luft verwendet, welche über den Entlüftungskanal ein- bzw. ausgebracht wird. Eine Kühlung des Primärteils ist insoweit wichtig, als dass eine Erwärmung des Schlittens zu einer Längenausdehnung desselben und damit zu einer Beeinflussung der Position der Werkzeugspitze führt.

Vorteilhaft kann es hierzu auch sein, wenn ein Isolierelement vorgesehen ist, das zwischen dem ersten Motorelement und dem Schlitten angeordnet ist. Die zwischen dem Primärteil und dem Schlitten vorgesehene Isolierung gewährleistet ebenfalls einen möglichst geringen Wärmeeintrag von dem Primärteil bzw. dem Motor in den Schlitten.

Es kann ferner von Vorteil sein, wenn der Schlitten einteilig ausgebildet ist, wobei das Wegmesssystems im Bereich der zweiten Stirnseite und/oder die Aufnahme für das Werkzeug am Schlitten angekoppelt ist. Zur Gewährleistung einer exakten Lagerung des Schlittens ist eine einteilige Bauweise desselben inklusive der dafür notwendigen Anlageflächen für die Aufnahme des jeweiligen Lagers vorteilhaft.

Durch den Einsatz eines eisenlosen Motors werden Einflüsse, welche durch die Anwesenheit von magnetischem Eisen in der Nähe des Motors oder in dem Motor selbst entstehen können, ausgeschlossen.

Auch kann es von Vorteil sein, wenn der Motor eisenlos ausgebildet ist, wobei das Primärteil einen Kunststoffkern und/oder einen Kunststoffmantel aufweist. Damit werden die mit einem Eisenkern einhergehenden Einflüsse auf das Laufverhalten des Motors verhindert.

Die Aufgabe wird auch durch ein Verfahren zum Bewegen eines Schlittens für einen Drehmeißel einer hochdynamischen Werkzeugmaschine gelöst, unter Verwendung eines Kreuzrollenlagers zur Lagerung des Schlittens wobei alle Wälzkörper des Kreuzrollenlagers zu jedem Zeitpunkt mit einer schlittenseitigen Lagerfläche in Wirkkontakt gebracht werden und der Schlitten mit einer Oszillationsfrequenz von mindestens 50 Hz, insbesondere zwischen 60 Hz und 200 Hz betrieben wird. Im Stand der Technik ist es bekannt, Schlitten mit Oszillationsfrequenzen der hier beanspruchten Größe in einer Blattfeder-, oder auch Luftlagerung zu führen. Die vorstehend genannten erfindungsgemäßen Merkmale gewährleisten jedoch auch den Einsatz eines Wälzkörperlagers für die Lagerung eines hochdynamisch angetriebenen Oszillationsschlittens.

Weitere Vorteile und Einzelheiten der Erfindung sind in den Patentansprüchen und in der Beschreibung erläutert und in den Figuren dargestellt. Es zeigen:
- Figur 1: einen Linearmotor in der Seitenansicht im Schnitt;
- Figur 2: den Linearmotor in der Seitenansicht;
- Figur 3: den Läufer mit dem Lager und Werkzeug.

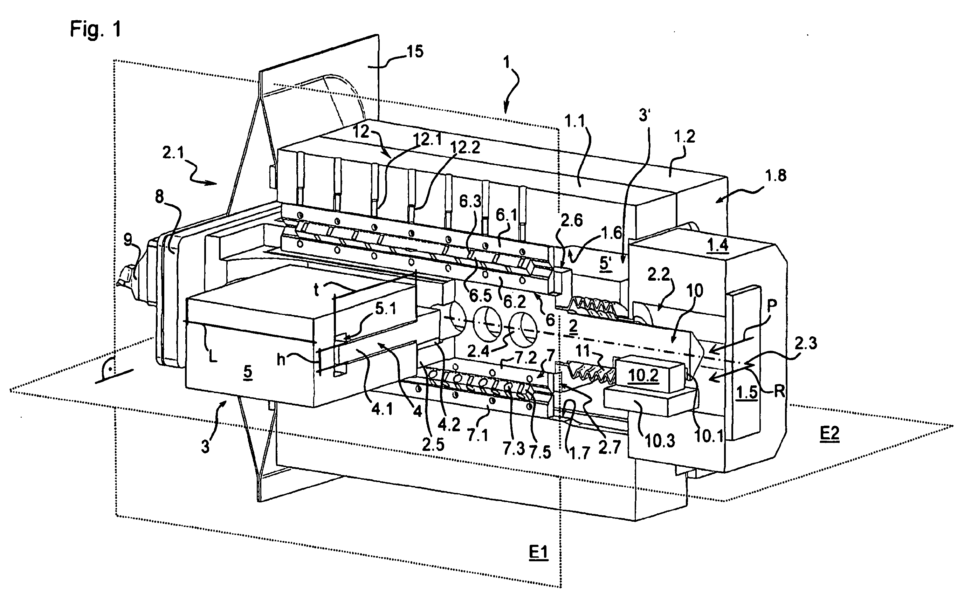

Der in Figur 1 dargestellte Linearmotor weist ein Gehäuse 1 auf, welches aus einem ersten Gehäuseteil 1.1 und einem zweiten Gehäuseteil 1.2 gebildet ist. Innerhalb des ersten Gehäuseteils 1.1 ist ein Läufer 2 über zwei Lager 6, 7 translatorisch bewegbar gelagert. Das erste Gehäuseteil 1.1 weist zwecks Aufnahme der Lager 6, 7 eine erste Aufnahmefläche 1.6 und eine zweite Aufnahmefläche 1.7 auf. Das jeweilige Lager 6, 7 ist als Kreuzrollenlager ausgebildet und weist jeweils eine äußere Lagerschiene 6.1, 7.1, eine innere Lagerschiene 6.2, 7.2 sowie einen Käfig 6.5 mit integrierten Wälzkörpern 6.3, 7.3 auf. In dem ersten Gehäuseteil 1.1 sind mehrere als Vorspannmittel 12 ausgebildete Schrauben 12.1, 12.2 vorgesehen, über die das Lager 6 gegen den Schlitten 2 vorspannbar ist. An einer ersten bzw. vorderen Stirnseite 2.1 sind eine Aufnahme 8 für ein Werkzeug 9 sowie das Werkzeug 9 angeordnet. Zwischen der Werkzeugaufnahme 8 und dem Gehäuse 1 ist eine flexible Abdeckung 15 zur Abdichtung des Gehäuses 1 vorgesehen. Im Bereich der zweiten bzw. hinteren Stirnseite 2.2 des Läufers 2 ist ein Wegmesssystem 10 vorgesehen. Das Wegmesssystem 10 weist einen an den Läufer angeordneten Messstreifen 10.1 auf, dem ein gehäuseseitiger Lesekopf 10.2 zugeordnet ist. Der Lesekopf 10.2 ist über ein Gehäuseteil 10.3 mit dem Gehäuse 1 bzw. einer hinteren Gehäuseabdeckung 1.4 verbunden.

Während die beiden Lager 6, 7 ober- bzw. unterhalb des Läufers 2 angeordnet sind, sind seitlich zum Läufer 2 zwei Motoren 3, 3' vorgesehen. Der jeweilige Motor 3 besteht aus einem als Primärteil ausgebildeten ersten Motorelement 4, welches seitlich am Schlitten 2 über eine Aufnahme 2.5 befestigt ist. Das jeweilige Primärteil 4 weist einen Kunststoffmantel 4.1 mit einer darin enthaltenen, nicht dargestellten Spule auf. Das jeweilige Primärteil 4 ist flach und als Schwert ausgebildet und ist innerhalb einer Aussparung 5.1 eines als Sekundärteil ausgebildeten zweiten Motorelements 5 angeordnet. Das Primärteil 4 erstreckt sich in Richtung R bzw. P, also radial zur Mittelachse 2.3 bzw. parallel dazu. Die Höhe h bzw. Dicke h des Primärteils 4 ist mindestens um den Faktor 3 kleiner als die Tiefe t bzw. Breite t des Primärteils 4 oder die Länge L des Primärteils 4. Gleiches gilt für die den U-förmigen Querschnitt bildende Aussparung 5.1 bzw. Nut. Sie weist eine Höhe h auf, die mindestens um den Faktor 3 kleiner ist als die Tiefe t der Nut 5.1 oder die Länge L der Nut 5.1. Das Sekundärteil 5 ist als Magnet in einer Doppelkammausführung ausgebildet. Das in die Aussparung 5.1 des Doppelkamms 5 angeordnete, über den Schlitten 2 geführte Primärteil 4 ist aufgrund einer generierbaren Motorkraft translatorisch nach vorne und hinten, also oszillierend bewegbar. Von dem zweiten Motor 3' ist in der Darstellung gemäß Figur 1 lediglich ein Sekundärteil 5' erkennbar. Der sonstige Aufbau des zweiten Motors 3' entspricht dem des im Schnitt dargestellten ersten Motors 3. Die beiden Motoren 3, 3' sind seitlich gegenüberliegend zum Schlitten 2 angeordnet. Das jeweilige Primärteil 4 ist schwertförmig flach ausgebildet und spannt somit eine Ebene E2 auf, wobei beide Primärteile 4 in der Ebene E2 angeordnet sind bzw. die Ebene E2 gemeinsam aufspannen.

Die beiden Lager 6, 7 sind wie vorstehend erläutert ober-und unterhalb des Läufers 2 innerhalb einer Ebene E1 angeordnet, wobei die Ebene E1 auch eine Mittelachse 2.3 des Läufers 2 beinhaltet.

Betreffend das zur Verfügung stehende Bauvolumen sind die sechs Raumrichtungen wie vorstehend erläutert den folgenden Bauteilgruppen zugeordnet. Die beiden Lager 6, 7 erstrecken sich nach oben und unten, die beiden Motoren 3, 3' erstrecken sich nach links und rechts, die Werkzeugaufnahme 8 und das Werkzeug 9 erstrecken sich nach vorne in den Bereich der ersten Stirnseite 2.1 und das Wegmesssystem 10 erstreckt sich nach hinten in den Bereich der zweiten Stirnseite 2.2.

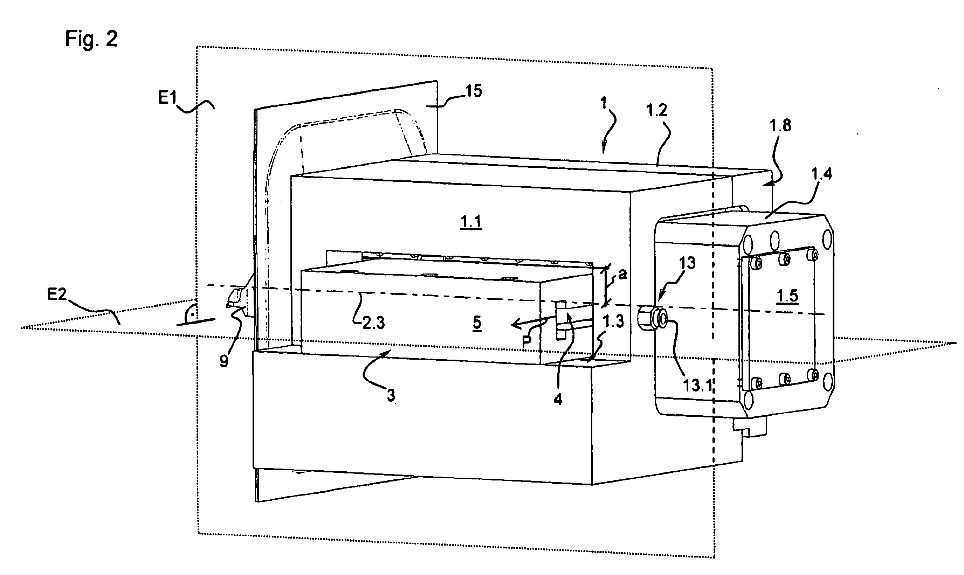

Gemäß der Darstellung Figur 2 weist das Gehäuse 1 am hinteren Ende des Wegmesssystems 10 die Abdeckung 1.4 mit einem Deckel 1.5 auf. Über den Deckel 1.5 ist das Wegmesssystem 10 zugänglich. Das Wegmesssystem 10 ist über ein als Faltbalg ausgebildetes Dichtmittel 11 gegenüber den Lagern 6, 7 bzw. dem Gehäuseinnenraum abgeschottet. Das Wegmesssystem 10 bzw. die hintere Stirnseite 2.2 des Schlittens 2 erstreckt sich bis in die kastenförmige Gehäuseabdeckung 1.4 an einer hinteren Stirnseite 1.8 des Gehäuses 1. Das Primärteil 4 erstreckt sich flügelartig in Richtung P, rechtwinklig zur Mittelachse 2.3.

Zwecks Be- und Entlüftung des jeweiligen Motors 3 bzw. des Bereichs des Primärteils 4 ist ein Be- und Entlüftungskanal 13.1 als Kühlmittel 13 vorgesehen. Der Be- und Entlüftungskanal 13.1 dient zum Zu- und/oder Abführen des Kühlmediums Luft aus bzw. in den Bereich des Primärteils 4 des jeweiligen Motors 3.

Zwecks Vermeidung eines übermäßigen Wärmeeintrags in den jeweiligen Motor 3, 3' bzw. vom jeweiligen Primärteil 4 in den Schlitten 2 ist wie in Figur 1 dargestellt ein Isolierelement 4.2 zwischen dem jeweiligen Primärteil 4 und dem jeweiligen Schlitten 2 bzw. einer Haltefläche 2.7 für das Primärteil 4 vorgesehen.

Gemäß Figur 2 weist das erste Gehäuseteil 1.1 eine dritte Aufnahmefläche 1.3 für das Primärteil 5 des Motors 3 auf. In entsprechender Weise weist das zweite Gehäuseteil 1.2 eine nicht dargestellte vierte Aufnahmefläche für das entsprechende Sekundärteil 5' des zweiten Motors 3' auf.

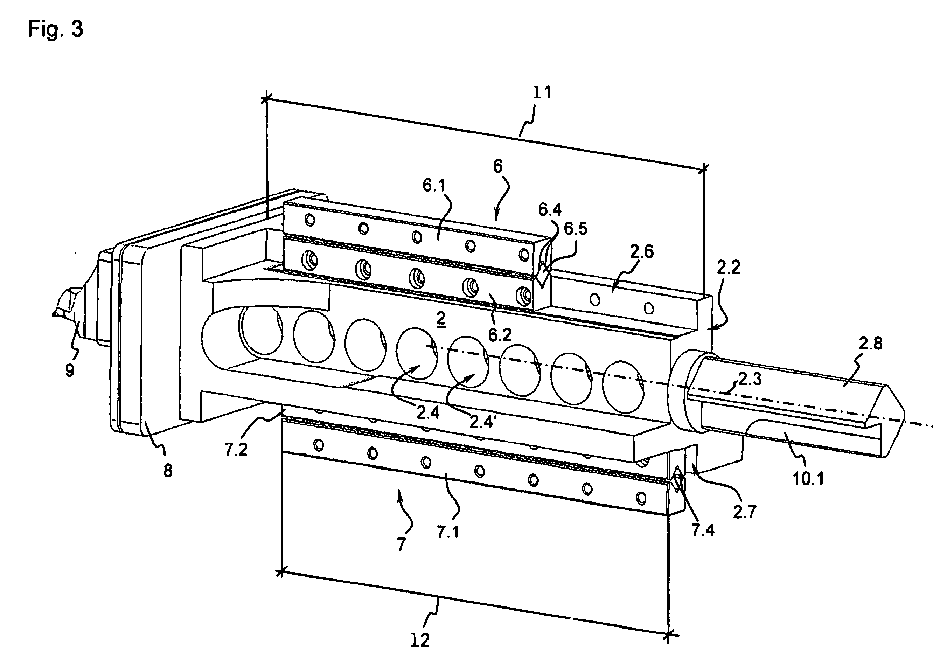

Gemäß Figur 3 sind an dem Schlitten 2 im Bereich der vorderen Stirnseite 2.1 die Werkzeugaufnahme 8 und das Werkzeug 9 angeordnet. Im Bereich der hinteren Stirnseite 2.2 ist ein Zapfen 2.8 vorgesehen, der zur Aufnahme des Messstreifens 10.1 dient. Der Schlitten 2 und der Zapfen 2.8 bilden gemäß Ausführungsbeispiel Figur 1 ein Bauteil und gemäß Ausführungsbeispiel Figur 3 zwei getrennte Bauteile, die miteinander verbunden sind. Der Schlitten weist zur Gewichtsreduzierung mehrere Ausnehmungen 2.4, 2.4' auf, die quer zur Mittelachse 2.3 und parallel zur Ebene E2 verlaufen.

Der Schlitten 2 weist eine obere Haltefläche 2.6 und die untere Haltefläche 2.7 zur Aufnahme des jeweiligen Lagers 6, 7 bzw. zur Aufnahme der jeweiligen inneren Lagerschiene 6.2, 7.2 auf. Die jeweilige Haltefläche 2.6, 2.7 sowie das jeweilige Lager 6, 7 weisen eine Länge 12 auf, die etwa 90 % einer Länge 11 des Schlittens 2 beträgt. Zwischen der jeweiligen äußeren Lagerschiene 6.1, 7.1 und der jeweiligen inneren Lagerschiene 6.2, 7.2 sind die Wälzkörper mit Käfig 6.5 angeordnet. Die jeweilige Lagerschiene 6.1 - 7.2 weist je ein Paar gehäuseseitige Lagerflächen 6.4 und schlittenseitige Lagerflächen 7.4 auf, die jeweils einen Winkel von 90° zueinander einschließen. Die jeweiligen Wälzkörper 6.3 sind wie in Figur 1 dargestellt abwechselnd der Ausrichtung der jeweiligen Lagerfläche 6.4, 7.4 nach angeordnet. Die jeweilige innere Lagerschiene 6.2 bzw. äußere Lagerschiene 7.1 weist entsprechende Lagerflächen auf.

Das obere Lager 6 ist in der Darstellung gemäß Figur 3 geschnitten dargestellt.

### Bezugszeichenliste

- 1: Gehäuse
- 1.1: erstes Gehäuseteil
- 1.2: zweites Gehäuseteil
- 1.3: dritte Aufnahmefläche
- 1.4: Abdeckung
- 1.5: Deckel
- 1.6: erste Aufnahmefläche
- 1.7: zweite Aufnahmefläche
- 1.8: Stirnseite, hinten
- 2: Schlitten, Läufer
- 2.1: erste Stirnseite
- 2.2: zweite Stirnseite
- 2.3: Mittelachse
- 2.4: Ausnehmung
- 2.4': Ausnehmung
- 2.5: Aufnahme
- 2.6: Haltefläche, oben
- 2.7: Haltefläche, unten
- 2.8: Zapfen
- 3: Motor
- 3': zweiter Motor
- 4: erstes Motorelement, Primärteil
- 4.1: Kunststoffmantel
- 4.2: Isolierelement
- 5: zweites Motorelement, Doppelkamm, Sekundärteil
- 5': zweites Motorelement, Doppelkamm, Sekundärteil
- 5.1: Aussparung, Nut
- 6: erstes Lager, Kreuzrollenlager, Wälzkörperlager
- 6.1: äußere Lagerschiene
- 6.2: innere Lagerschiene
- 6.3: Wälzkörper
- 6.4: Lagerfläche, gehäuseseitig
- 6.5: Käfig
- 7: zweites Lager, Kreuzrollenlager, Wälzkörperlager
- 7.1: äußere Lagerschiene
- 7.2: innere Lagerschiene
- 7.3: Wälzkörper
- 7.4: Lagerfläche, schlittenseitig
- 7.5: Käfig
- 8: Aufnahme
- 9: Werkzeug
- 10: Wegmesssystem
- 10.1: Messstreifen
- 10.2: Lesekopf
- 10.3: Gehäuseteil
- 11.: Dichtmittel
- 12: Vorspannmittel
- 12.1: Schrauben
- 12.2: Schrauben
- 13: Kühlmittel
- 13.1: Be- und/oder Entlüftungskanal
- 15: Abdeckung

- a: Abstand
- E1: Ebene
- E2: Ebene
- h: Höhe, Dicke
- L: Länge
- 11: Länge
- 12: Länge
- P: Richtung
- R: Richtung
- t: Tiefe, Breite

## Patentansprüche

1. Linearantrieb für eine Werkzeugmaschine mit einem Gehäuse (1), mit einem in dem Gehäuse (1) über zwei Lager (6, 7) in Richtung einer Mittelachse (2.3) axial bewegbar gelagerten Schlitten (2) der Länge 11 und mit mindestens einem ersten Motor (3), aufweisend ein erstes Motorelement (4) und ein zweites Motorelement (5), wobei das erste Motorelement (4) als Primärteil ausgebildet und an dem Schlitten (2) angeordnet ist und das zweite Motorelement (5) als Sekundärteil ausgebildet und an dem Gehäuse (1) angeordnet ist, **wobei** das erste Lager (6) und das zweite Lager (7) als Wälzkörperlager ausgebildet und mit Bezug zur Mittelachse (2.3) gegenüberliegend zum Schlitten (2) angeordnet sind und einen Abstand a zur Mittelachse (2.3) aufweisen,
**dadurch gekennzeichnet, dass der Motor (3, 3') eisenlos ausgebildet ist, wobei das Primärteil (4) einen Kunststoffkern und/oder einen Kunststoffmantel (4.1) aufweist**.

2. Linearantrieb nach Anspruch 1,
**dadurch gekennzeichnet, dass** das erste Lager (6) und das zweite Lager (7) als Kreuzrollenlager ausgebildet sind.

3. Linearantrieb nach Anspruch 1 oder 2,
**dadurch gekennzeichnet, dass** das erste Lager (6) und das zweite Lager (7) eine Länge 12 und je mindestens fünf Wälzkörper (6.3) aufweisen, wobei die Länge 12 des Lagers (6) mindestens 50 % der Länge 11 des Schlittens (2) beträgt.

4. Linearantrieb nach einem der vorhergehenden Ansprüche,
**dadurch gekennzeichnet, dass** das Primärteil (4) flach ausgebildet ist und in radialer Richtung R zur Mittelachse (2.3) oder parallel zur Richtung R vom Schlitten (2) absteht, wobei das Sekundärteil (5) einen eine nutförmige Aussparung (5.1) bildenden U-förmigen Querschnitt aufweist, in dem das Primärteil (4) aufgenommen ist.

5. Linearantrieb nach einem der vorhergehenden Ansprüche,
**dadurch gekennzeichnet, dass** ein zweiter Motor (3') mit identischer Bauweise vorgesehen ist, der mit Bezug zum Schlitten (2) gegenüberliegend zum ersten Motor (3) angeordnet ist, wobei beide Primärteile (4) mit Bezug zu der flachen Grundform in einer gemeinsamen Ebene E2 angeordnet sind.

6. Linearantrieb nach einem der vorhergehenden Ansprüche,
**dadurch gekennzeichnet, dass** die Mittelachse (2.3) und die beiden Lager (6, 7) in einer gemeinsamen Ebene E1 angeordnet sind, wobei die Ebene E1 rechtwinklig zu der Ebene E2 angeordnet ist.

7. Linearantrieb nach einem der vorhergehenden Ansprüche,
**dadurch gekennzeichnet, dass** das Gehäuse (1) ein erstes Gehäuseteil (1.1) und ein zweites Gehäuseteil (1.2) aufweist, wobei das erste Gehäuseteil (1.1) eine erste Aufnahmefläche (1.6) für das erste Lager (6), eine zweite Aufnahmefläche (1.7) für das zweite Lager (7) und eine dritte Aufnahmefläche (1.3) für das Sekundärteil (5) aufweist.

8. Linearantrieb nach einem der vorhergehenden Ansprüche,
**dadurch gekennzeichnet, dass** der Schlitten (2) eine erste Stirnseite (2.1) und eine zweite Stirnseite (2.2) aufweist, wobei im Bereich der ersten Stirnseite (2.1) eine Aufnahme (8) für ein Werkzeug (9) vorgesehen ist und im Bereich der zweiten Stirnseite (2.2) ein Wegmesssystems (10) vorgesehen ist.

9. Linearantrieb nach Anspruch 8,
**dadurch gekennzeichnet, dass** ein Dichtmittel (11) vorgesehen ist, mittels dessen das Wegmesssystem (10) gegenüber einem Innenraum des Gehäuses (1), in dem die Lager (6, 7) des Schlittens (2) angeordnet sind, abgeschottet ist.

10. Linearantrieb nach einem der vorhergehenden Ansprüche,
**dadurch gekennzeichnet, dass** zwischen dem Gehäuse (1) und dem Lager (6) Vorspannmittel (12) vorgesehen sind, mittels derer das Lager (6) gegen den Schlitten (2) vorspannbar ist.

11. Linearantrieb nach Anspruch 10,
**dadurch gekennzeichnet, dass** als Vorspannmittel (12) mehrere Schrauben (12.1, 12.2) vorgesehen sind, die parallel zu der Ebene E1 angeordnet sind und die mittel- oder unmittelbar gegen das Lager (6) vorspannbar sind.

12. Linearantrieb nach einem der vorhergehenden Ansprüche,
**dadurch gekennzeichnet, dass** Kühlmittel (13) vorgesehen sind, über die das jeweilige Primärteil (4) kühlbar ist.

13. Linearantrieb nach Anspruch 12,
**dadurch gekennzeichnet, dass** als Kühlmittel (13) ein Be- und/oder Entlüftungskanal (13.1) im Bereich der schlitzförmigen Aussparung (5.1) des Sekundärteils (5) und/oder im Bereich des Primärteils (4) vorgesehen ist.

14. Linearantrieb nach einem der vorhergehenden Ansprüche,
**dadurch gekennzeichnet, dass** ein Isolierelement (4.2) vorgesehen ist, das zwischen dem ersten Motorelement (4) und dem Schlitten (2) angeordnet ist.

15. Linearantrieb nach einem der Ansprüche 9 bis 14,
**dadurch gekennzeichnet, dass** der Schlitten (2) einteilig ausgebildet ist, wobei das Wegmesssystems (10) im Bereich der zweiten Stirnseite (2.2) und/oder die Aufnahme (8) für das Werkzeug (9) am Schlitten (2) angekoppelt ist.

16. Verfahren zum Betreiben eines Linearantriebs nach einem der Ansprüche 1 bis 15, wobei ein Schlitten (2) für einen Drehmeißel einer hochdynamischen Werkzeugmaschine unter Verwendung eines Kreuzrollenlagers (6, 7) zur Lagerung des Schlittens (2) bewegt wird,
**dadurch gekennzeichnet, dass** stets alle Wälzkörper (6.3) des Kreuzrollenlagers (6, 7) mit einer schlittenseitigen Lagerfläche (7.4) in Wirkkontakt stehen und der Schlitten (2) mit einer Oszillationsfrequenz von mindestens 50 Hz, insbesondere zwischen 60 Hz und 200 Hz betrieben wird.

## Claims

1. Linear drive for a machine tool with a housing (1), with a carriage (2) having a length I1 and being supported axially movably along a central axis (2.3) in the housing (1) by means of two bearings (6, 7), and with at least a first motor (3) having a first motor element (4) and a second motor element (5), wherein the first motor element (4) is designed as a primary part and arranged on the carriage (2) and the second motor element (5) is designed as a secondary part and arranged on the housing (1), wherein the first bearing (6) and the second bearing (7) are designed as rolling bearings and arranged opposite the carriage (2) with respect to the central axis (2.3) and have a distance a from the central axis (2.3),
**characterized in that** the motor (3, 3') is designed as an ironless motor, wherein the primary part (4) has a plastic core and/or a plastic sheath (4.1).

2. Linear drive according to claim 1,
**characterized in that** the first bearing (6) and the second bearing (7) are designed as crossed roller bearings.

3. Linear drive according to claim 1 or 2,
**characterized in that** the first bearing (6) and the second bearing (7) have a length 12 and at least five rolling elements (6.3) each, wherein the length 12 of the bearing (6) is at least 50 % of the length I1 of the carriage (2).

4. Linear drive according to any one of the preceding claims,
**characterized in that** the primary part (4) is flat and projects from the carriage (2) in a radial direction R with respect to the central axis (2.3) or parallel to the direction R, wherein the secondary part (5) has a U-shaped cross-section that forms a groove-shaped recess (5.1), said U-shaped cross-section receiving the primary part (4).

5. Linear drive according to any one of the preceding claims,
**characterized in that** a second motor (3') of identical design is provided that is arranged opposite the first motor (3) with respect to the carriage (2), wherein both primary parts (4) are arranged in a common plane E2 with respect to the flat basic shape.

6. Linear drive according to any one of the preceding claims,
**characterized in that** the central axis (2.3) and the two bearings (6, 7) are arranged in a common plane E1, wherein the plane E1 is arranged orthogonal to the plane E2.

7. Linear drive according to any one of the preceding claims,
**characterized in that** the housing (1) has a first housing part (1.1) and a second housing part (1.2), wherein the first housing part (1.1) has a first locating surface (1.6) for the first bearing (6), a second locating surface (1.7) for the second bearing (7), and a third locating surface (1.3) for the secondary part (5).

8. Linear drive according to any one of the preceding claims,
**characterized in that** the carriage (2) has a first face (2.1) and a second face (2.2), wherein a holding fixture (8) for a tool (9) is provided in the region of the first face (2,1) and a position-measuring system (10) is provided in the region of the second face (2.2).

9. Linear drive according to claim 8,
**characterized in that** a sealing means (11) is provided by means of which the position-measuring system (10) is sealed against an interior of the housing (1) in which the bearings (6, 7) of the carriage (2) are arranged.

10. Linear drive according to any one of the preceding claims,
**characterized in that** prestressing means (12) are provided between the housing (1) and the bearing (6) by means of which the bearing (6) can be prestressed against the carriage (2).

11. Linear drive according to claim 10,
**characterized in that** several screws (12.1, 12.2) that are arranged parallel to the plane E1 and can be indirectly or directly prestressed against the bearing (6) are provided as prestressing means (12).

12. Linear drive according to any one of the preceding claims,
**characterized in that** cooling means (13) are provided by means of which the respective primary part (4) can be cooled.

13. Linear drive according to claim 12,
**characterized in that** an airing and/or deairing channel (13.1) in the region of the groove-shaped recess (5.1) of the secondary part (5) and/or in the region of the primary part (4) is provided as cooling means (13).

14. Linear drive according to any one of the preceding claims,
**characterized in that** an insulating element (4.2) is provided that is arranged between the first motor element (4) and the carriage (2).

15. Linear drive according to any one of claims 9 to 14,
**characterized in that** the carriage (2) is designed as a one-piece carriage, wherein the position-measuring system (10) in the region of the second face (2.2) and/or the holding fixture (8) for the tool (9) is coupled to the carriage (2).

16. Method for operating a linear drive according to any one of claims 1 to 15,
wherein a carriage (2) for a cutting tool of a highly dynamic machine tool is moved by using a crossed roller bearing (6, 7) for supporting the carriage (2),
**characterized in that** all rotting elements (6.3) of the crossed roller bearing (6, 7) are always operatively connected to a bearing surface (7.4) arranged on the carriage side and that the carriage (2) is operated at an oscillation frequency of at least 50 Hz, in particular between 60 Hz and 200 Hz.

## Revendications

1. Entraînement linéaire pour une machine-outil avec un carter (1), avec un chariot (2) de longueur I1 supporté dans le carter (1) par le biais de ceux paliers (6, 7) et mobile axialement en direction d'un axe central (2.3), et avec au moins un premier moteur (3), présentant un premier élément de moteur (4) et un deuxième élément de moteur (5), le premier élément de moteur (4) étant constitué en tant que partie primaire et disposé sur le chariot (2), et le deuxième élément de moteur (5) étant constitué en tant que partie secondaire et disposé sur le carter (1), le premier palier (6) et le deuxième palier (7) étant constitués en tant que corps de palier à roulements et disposés en face du chariot (2) par rapport à l'axe central (2.3) et présentant une distance a à l'axe central (2.3),
**caractérisé en ce que**
le moteur (3, 3') est constitué sans fer, la partie primaire (4) présentant un noyau en matière plastique et/ou une enveloppe en matière plastique (4.1).

2. Entraînement linéaire selon la revendication 1,
**caractérisé en ce que**
le premier palier (6) et le deuxième palier (7) sont constitués en tant que paliers à rouleaux croisés.

3. Entraînement linéaire selon la revendication 1 ou 2,
**caractérisé en ce que** le premier palier (6) et le deuxième palier (7) présentent une longueur I2 et respectivement au moins cinq corps de roulements (6.3), la longueur I2 du palier (6) représentant au moins 50 % de la longueur I1 du chariot (2).

4. Entraînement linéaire selon une des revendications précédentes,
**caractérisé en ce que**
la partie primaire (4) est constituée de façon plate et dépasse du chariot (2) dans la direction radiale R par rapport à l'axe central (2.3) ou parallèlement à la direction R, la partie secondaire (5) présentant une section transversale en U, formant un évidement (5.1) en forme de rainure, dans laquelle est logée la partie primaire (4).

5. Entraînement linéaire selon une des revendications précédentes,
**caractérisé en ce**
**qu'**un deuxième moteur (3') est prévu, avec une construction identique, qui est disposé en face du premier moteur (3) par rapport au chariot (2), les deux parties primaires (4) étant disposées, par rapport à la forme de base plate, dans un plan E2 commun.

6. Entraînement linéaire selon une des revendications précédentes,
**caractérisé en ce que**
l'axe central (2.3) et les deux paliers (6, 7) sont disposés dans un plan commun E1, le plan E1 étant disposé à angle droit par rapport au plan E2.

7. Entraînement linéaire selon une des revendications précédentes,
**caractérisé en ce que**
le carter (1) présente une première partie de carter (1.1) et une deuxième partie de carter (1.2), la première partie de carter (1.1) présentant une première surface de logement (1.6) pour le premier palier (6), une deuxième surface de logement (1.7) pour le deuxième palier (7) et une troisième surface de logement (1.3) pour la partie secondaire (5).

8. Entraînement linéaire selon une des revendications précédentes,
**caractérisé en ce que**
le chariot (2) présente un premier côté frontal (2.1) et un deuxième côté frontal (2.2), un logement (8) étant prévu pour un outil (9) dans la zone du premier côté frontal (2.1), et un système de mesure de course (10) étant prévu dans la zone du deuxième côté frontal (2.2).

9. Entraînement linéaire selon la revendication 8,
**caractérisé en ce**
**qu'**un moyen d'étanchéité (11) est prévu, au moyen duquel le système de mesure de course (10) est cloisonné par rapport à un espace intérieur du carter (1) dans lequel sont disposés les paliers (6, 7) du chariot (2).

10. Entraînement linéaire selon une des revendications précédentes,
**caractérisé en ce que**,
entre le carter (1) et le palier (6), il est prévu des moyens de pré-serrage (12) au moyen desquels le palier (6) peut être pré-serré contre le chariot (2).

11. Entraînement linéaire selon la revendication 10,
**caractérisé en ce que**,
comme moyens de pré-serrage (12), il est prévu plusieurs vis (12.1, 12.2) qui sont disposées parallèlement au plan E1 et qui peuvent être pré-serrées indirectement ou directement contre le palier (6).

12. Entraînement linéaire selon une des revendications précédentes,
**caractérisé en ce**
**qu'**il est prévu des moyens de refroidissement (13) par le biais desquels la partie primaire (4) respective peut être refroidie.

13. Entraînement linéaire selon la revendication 12,
**caractérisé en ce que**,
en tant que moyens de refroidissement (13), il est prévu une gaine d'aération et/ou de désaération (13.) dans la zone de l'évidement (5.1) en forme de fente de la partie secondaire (5) et/ou dans la zone de la partie primaire (4).

14. Entraînement linéaire selon une des revendications précédentes,
**caractérisé en ce**
**qu'**il est prévu un élément d'isolation (4.2) qui est disposé entre le premier élément de moteur (4) et le chariot (2).

15. Entraînement linéaire selon une des revendications 9 à 14,
**caractérisé en ce que**
le chariot (2) est constitué d'une seule pièce, le système de mesure de course (10) étant couplé dans la zone du deuxième côté frontal (2.2) et/ou le logement (8) pour l'outil (9) étant couplé sur le chariot (2).

16. Procédé de mise en oeuvre d'un entraînement linéaire selon une des revendications 1 à 15, un chariot (2) pour un outil de tournage d'une machine-outil très dynamique étant déplacé avec utilisation d'un palier à rouleaux croisés (6, 7) pour supporter le chariot (2),
**caractérisé en ce que**
tous les paliers à roulements (6.3) du palier à roulements croisés (6, 7) sont en contact actif avec une surface de palier (7.4) côté chariot, et **en ce que** le chariot (2) est mis en oeuvre avec une fréquence d'oscillation d'au moins 50 Hz, en particulier entre 60 Hz et 200 Hz.
